# EUROPÄISCHE PATENTANMELDUNG

(11) **EP 3 653 891 A1**
(43) Veröffentlichungstag der Anmeldung: **20.05.2020**
(21) Anmeldenummer: 19219506.3
(22) Anmeldetag: 31.07.2015
(51) Int. Cl.: F16B 12/44, F16B 12/40, F16B 12/50, F16B 12/54, A47C 19/00

(54) **ECKVERBINDER FÜR STABFÖRMIGE PROFILELEMENTE**

(30) Priorität: 01.08.2014 DE 102014215254
(62) Teilanmeldung aus: 15747450.3
(71) Anmelder: Schirmer, Eckhard, 86911 Diessen am Ammersee (DE)
(72) Erfinder: Schirmer, Eckhard, 86911 Diessen am Ammersee (DE)
(74) Vertreter: Reitstötter Kinzebach

(57) **Zusammenfassung**

Die Erfindung betrifft einen Eckverbinder (10) für stabförmige Profilelemente, mit einem Verbindungselement (11), das wenigstens zwei, im wesentlichen senkrecht zueinander orientierten Anschlussabschnitten (20,21) umfasst, die jeweils so ausgebildet sind, dass jeweils ein Anschlussabschnitt (20,21) und ein Stirnende der zu verbindenden stabförmigen Profilelemente (18,19,39) ineinandergreifen, wenigstens einer Querstrebe (12) deren Enden (26,27) so ausgebildet sind, dass jeweils ein Ende (26,27) der Querstrebe (12) und ein auf einer Mantelfläche der zu verbindenden stabförmigen Profilelemente (18,19,39) vorgesehener Verbindungsabschnitt (30,31,48,49) lösbar ineinandergreifen, und einem Spannelement (13), welches die Querstrebe (12) lösbar gegen den Eckverbinder spannt. Die Erfindung betrifft außerdem ein Montagesystem aus derartigen Eckverbindern und Trag- oder Halterahmen aus derartigen Eckverbindern und Profilelementen.

## Beschreibung

Die vorliegende Erfindung betrifft einen Eckverbinder für stabförmige Profilelemente, ein Montagesystem welches mehrere unterschiedliche derartige Eckverbinder umfasst. sowie einen Trage- oder Halterahmen, der aus Profilelementen zusammengesetzt ist, wobei wenigstens zwei Profilelemente über einen Eckverbinder miteinander verbunden sind.

Ein derartiger Trage- oder Halterahmen ist beispielsweise in der deutschen Patentschrift DE 197 34 350 C1 des Anmelders beschrieben. Der bekannte Trage- oder Halterahmen weist einen Innenrahmen oder einen um den Halterahmen gehaltenen Gegenstand auf, der über Zugverbindungen den Rahmen insgesamt stabilisiert, so dass die den Rahmen bildenden Profilelemente und Eckverbinder als einfache Steckverbindungen ausgebildet werden können und ohne weitere Befestigungsmittel montierbar sind. Nachteilig an dem bekannten Rahmen ist die Tatsache, dass im Inneren des Rahmens vorgesehene Spannsystem die Einsatzmöglichkeiten eingeschränkt sind. Insbesondere wenn mit nicht-quadratischen Rechteck Geometrien gearbeitet wird, ist ein Innenrahmen zur Aufnahme der Spannkräfte erforderlich, da nicht mehr mit diagonalverlaufenden Spannseilen gearbeitet werden kann, zumindest wenn nicht individuell angepasste Eckverbinder verwendet werden sollen.

Im holzbearbeitenden Handwerk, insbesondere in Schreinereien und Tischlereien, werden häufig Platten, die zur Bildung einer Ecke miteinander verbunden werden, zusätzlich durch Querstreben oder -platten stabilisiert. Dabei werden üblicherweise die Enden der Querstreben mit den Platten verschraubt. In der britische Patentanmeldung GB 2391802 A wird ein zerlegbares Bettgestell beschrieben, das aus vier Seitenwangen besteht, die über vier Eckpfosten miteinander verbunden sind. Zur Bildung einer Eckverbindung werden zwei Seitenwangen mit ihren Stirnflächen gegen entsprechende Anschlagflächen des Eckpfostens gedrückt. Dies geschieht mit Hilfe von zwei Eckstreben, die an ihren Enden Vorsprünge aufweisen, die in Öffnungen der Seitenwangen eingreifen. Die Querstreben werden mit dem Eckverbinder verschraubt und ziehen so die Seitenwangen in Richtung Eckverbinder.

Die in GB 2391802 A beschriebene Verbindungstechnik ist für Rahmen und Gestelle aus stabförmigen Profilelementen nicht geeignet, da sie für eine stabile Verbindung mindestens zwei Eckverbinder pro Ecke benötigt. Selbst dann kann die im Stand der Technik beschriebene Konstruktion keine nennenswerten Kräfte aufnehmen, die zwischen Eckpfosten und den Seitenwangen wirken und eignet sich daher nur für den dort beschriebenen Anwendungsfall eines Bettgestells, wo die durch Lattenrost, Matratze und Benutzer ausgeübten Kräfte im wesentlich senkrecht nach unten und parallel zu den Anschlagflächen zwischen Eckpfosten und Seitenwangen wirken. Ferner können mit dem aus GB 2391802 A bekannten Eckverbinder keine komplexeren Rahmen oder Gestelle konstruiert werden, da der bekannte Eckverbinder nur für maximal zwei Seitenwangen geeignet ist.

Der vorliegenden Erfindung liegt das technische Problem zugrunde, einen Eckverbinder für stabförmige Profilelemente bereitzustellen, mit dem auf einfachere und stabilere Weise stabförmige Profilelement zusammengebaut werden können und der auch den Aufbau von komplexeren Rahmen und Gestellen, insbesondere von sich in alle Raumrichtungen erstreckenden Gestellen, aus diesen stabförmigen Profilelementen ermöglicht.

Gelöst wird dieses technische Problem durch den Eckverbinder gemäß vorliegendem Anspruch 1. Vorteilhafte Weiterbildungen des erfindungsgemäßen Eckverbinders sind Gegenstände der abhängigen Patentansprüche.

Gegenstand der vorliegenden Erfindung ist demnach ein Eckverbinder für stabförmige Profilelemente, mit einem Verbindungselement, das wenigstens zwei, im wesentlichen senkrecht zueinander orientierten Anschlussabschnitten umfasst, die jeweils so ausgebildet sind, dass jeweils ein Anschlussabschnitt und ein Stirnende der zu verbindenden stabförmigen Profilelemente ineinandergreifen, wenigstens einer Querstrebe deren Enden so ausgebildet sind, dass jeweils ein Ende der Querstrebe und ein auf einer Mantelfläche der zu verbindenden stabförmigen Profilelemente vorgesehener Verbindungsabschnitt lösbar ineinandergreifen, und einem Spannelement, welches die Querstrebe lösbar gegen den Eckverbinder spannt.

Überraschend wurde gefunden, dass der erfindungsgemäße Eckverbinder den daraus hergestellten Rahmenkonstruktionen mit stabförmigen Profilelementen eine besonders hohe Stabilität verleiht, welche die Stabilität herkömmlicher Verbindungssysteme für stabförmige Profilelemente in vielen Fällen weit übertrifft. Dabei sind die mit erfindungsgemäßen Eckverbindern hergestellte Rahmenkonstruktionen besonders schnell und einfach aufbaubar und wieder abbaubar.

Die Profilelemente, für die der erfindungsgemäße Eckverbinder geeignet ist, können im Querschnitt unterschiedlichste Allgemeinformen aufweisen, also beispielsweise rund, elliptisch, polygonal, insbesondere rechteckig oder quadratisch. Die Profilelemente können aus unterschiedlichsten Materialien wie Metall, Kunststoff oder Holz bestehen. Die Profilelemente können als Vollmaterial in Form von Stäben oder als röhrenförmige Hohlprofile vorliegen. Die oben erwähnten Allgemeinformen können Längsstrukturen, wie Nuten, Vorsprünge oder Kanäle, weiter strukturiert sein. Mit dem Begriff "stabförmig" werden im vorliegenden Zusammenhang Profilelemente bezeichnet, deren Länge um ein Vielfaches größer als die größte Querabmessung ist, also beispielsweise im Fall von Profilelementen mit kreisförmigem Querschnitt um ein Vielfaches größer als der der Durchmesser, oder im Fall von Profilelementen mit rechteckigem Querschnitt um ein Vielfaches größer als die längste Seitenkante des Querschnitts. Typischerweise ist deren Länge wenigstens 10x, vorzugsweise wenigstens 20x größer als die größte Querabmessung. Stabförmige Profilelemente sind darüber hinaus Profilelemente, bei denen sich die Querabmessungen nicht stark unterscheiden. Die Querabmessungen können im wesentliche gleich sein, wie bei Profilelemente mit rundem, quadratischem oder regelmäßig-polygonalem Querschnitt. Bei unterschiedlichen Querabmessungen, wie beispielsweise im Fall von Profilelementen mit unregelmäßig-polygonalem Querschnitt, sollen sich die Querabmessungen, in diesem Fall also die Seitenlängen des Querschnitts, vorzugsweise um weniger fünffache, vorzugsweise um höchstens das doppelte der kürzesten Seite unterscheiden.

Das Verbindungselement kann aus einem beliebigen für den jeweiligen Anwendungsfall geeigneten Material bestehen, beispielsweise aus Metall, insbesondere aus Gusseisen, Edelstahl oder Aluminium, aus Kunststoff oder aus Holz und aus einem Vollmaterial oder als Hohlkörper gefertigt sein.

Die beiden im wesentlichen senkrecht zueinander orientierten Anschlussabschnitten wirken vorzugsweise so mit den Stirnenden der zu verbindenden stabförmigen Profilelemente zusammen, dass der Anschlussabschnitt entweder das Stirnende des Profilelements umgreift oder, umgekehrt, das Stirnende des Profilelements den Anschlussabschnitt des Verbindungselements umgreift. Das Profilelement und der Anschlussabschnitt des Verbindungselements überlappen sich also im Endbereich des Profilelements, was eine Verbindung gewährleistet, die im Gegensatz zu dem oben erwähnten Stand der Technik auch hohe Querkräfte aufnehmen kann. Gleichzeitig wird so auch die richtige Orientierung der Profilelemente gewährleistet, was den Aufbau komplexer Rahmenkonstruktionen ermöglicht. Im Gegensatz zu dem aus GB 2391802 A bekannten Eckverbinder benötigt der erfindungsgemäße Eckverbinder aufgrund der Überlappung und Führung von Anschlussabschnitt zu zugehörigem Profilelement lediglich eine Querstrebe für die Verbindung von zwei Profilelementen.

Unter einer "im wesentlichen senkrechten Orientierung" der Anschlussabschnitte, versteht man Anschlussabschnitte die in etwa einen rechten Winkel einschließen, vorzugsweise einen Winkel im Bereich von 80 bis 100°, wobei ein rechter Winkel besonders bevorzugt ist. Im Fall von Abweichungen vom rechten Winkel kann jedoch durch weitere Maßnahmen wie teleskopartig veränderliche Querstreben und/oder bewegliche Enden der Querstreben dafür gesorgt werden, dass ein Festspannen der Profilelemente mit einer Querstrebe trotzdem möglich ist. Eine solche Lösung ist jedoch aufwändiger und teurer, so dass rechte Winkel bevorzugt sind.

Die Befestigung der Profilelemente an dem Verbindungselement erfolgt dadurch, dass jeweils ein Ende der Querstrebe und ein auf einer Mantelfläche der zu verbindenden stabförmigen Profilelemente vorgesehener Verbindungsabschnitt lösbar ineinandergreifen. Ein Spannelement, welches zunächst noch locker ist, ermöglicht den Zusammenbau der beiden Profilelement und der Querstrebe. Sobald alle Teile ineinandergreifen, wird die Querstrebe gegen den Eckverbinder spannt, so dass der so gebildete Verbund fest fixiert wird. Da das Spannelement auch wieder gelockert werden kann, kann die so gebildete Konstruktion vom Benutzer auch wieder leicht gelöst werden.

Die Querstrebe selbst kann stabförmig, platten- oder flügelförmig oder als längliches, kastenförmiges Bauteil ausgebildet sein. Insbesondere in Fällen, bei denen die Enden der Querstrebe eine größere Kontaktfläche mit den zu verbindenden Profilelementen aufweisen, wird die Form der Enden der Querstrebe vorzugsweise an die Außenform der Profilelemente angepasst. Beispielsweise kann man bei runden Profilelementen eine entsprechende konkave Endfläche an den Enden der Querstrebe vorsehen.

Vorzugsweise greifen die Querstrebe und die auf den stabförmigen Profilelementen vorgesehenen Verbindungsabschnitte so ineinander, dass der Eckverbinder und die zu verbindenden stabförmigen Profilelemente formschlüssig miteinander verbunden werden. Durch den Formschluss können sich die zu verbindenden Bauelemente auch dann nicht lösen, wenn das Spannelement noch nicht fest angezogen ist. Dies ermöglicht es bei einer Konstruktion aus mehren Eckverbindern, die einzelnen Spannelemente abwechselnd immer fester zu spannen, so dass ein Verkannten der Profilelemente beim Zusammenbau wirksam vermieden werden kann.

Gemäß einer Ausführungsform wird die formschlüssige Verbindung dadurch erzielt, dass an den Enden der Querstrebe Vorsprünge angeordnet sind, die in Bohrungen eingreifen, die in den Verbindungsabschnitten der Mantelflächen der stabförmigen Profilelemente ausgespart sind. Gemäß einer anderen Ausführungsform sind an den Enden der Querstrebe Ausnehmungen ausgespart, in die Zapfen eingreifen können, die in den Verbindungsabschnitten der Mantelflächen der stabförmigen Profilelemente angeordnet sind. Die Vorsprünge und Zapfen können entweder gewig mit der Querstrebe bzw. dem Profilelement ausgebildet sein oder als separates Bauteil an der Querstrebe bzw. dem Profilelement befestigt werden. Die Bohrungen und Zapfen können bereits in entsprechend gefertigten Profilelementen vorhanden sein. Es ist jedoch auch möglich, dass dem Benutzer zu einem Profilelement eine entsprechend Anleitung zur Anbringung von Bohrungen oder Zapfen an herkömmlichen, kommerziell erhältlichen Profilelementen an die Hand gegeben wird, beispielswiese in Form ein zu dem jeweiligen Eckverbinder passenden Bohrschablone.

Besonders bevorzugt umfasst der Anschlussabschnitt des Eckverbinders Anschlusselemente, deren Querschnitt an den Stabquerschnitt der stabförmigen Profilelemente angepasst ist. So wird eine besonders effektive und spielfreie Führung der Profilelemente beim Verspannen der Anordnung ermöglicht. Gleichzeitig wird so bei Profilelementen mit nicht-kreissymmetrischem Querschnitt ein Schutz gegen Verdrehen des Profilelements gewährleistet.

Die Anschlusselemente können einstückig mit dem Verbindungselement ausgebildet sein. Gemäß einer anderen Ausführungsform sind die Anschlusselemente aber austauschbar in dem Anschlussabschnitt des Eckverbinders angeordnet. Dadurch können mit ein und demselben Verbindungselement durch Wahl der geeigneten Anschlusselemente unterschiedliche Profilelemente verbunden werden.

Die Spannelemente können in verschiedenster Weise verwirklicht werden. Entscheidend ist, dass das Spannelement derart auf die Querstrebe wirkt, dass beim Betätigen des Spannelements die Querstrebe die zu verbindenden Profilelemente in Richtung Verbindungselement zieht oder drückt und dadurch die Konstruktion fest fixiert. Gemäß einer Ausführungsform umfasst zumindest eines der Spannelemente eine Schraube, die in den Eckverbinder einschraubbar ist. In einer Variante liegt der Schraubenkopf liegt dabei direkt oder über eine Unterlegscheibe auf der Querstrebe auf und drückt beim Einschrauben die Querstrebe in Richtung des Verbindungselements. Gleichzeitig drücken die Enden der Querstrebe die beiden Profilelemente in Richtung des Verbindungselements.

Gemäß einer anderen Ausführungsform umfasst zumindest eines der Spannelemente einen Schnellspanner, mit dem eine ähnliche Wirkung wie mit der oben beschriebenen Schraube erzielt werden kann. Die Variante mit Schnellspanner ist insbesondere im Messebau bevorzugt, wo Rahmen und Gestelle mit dem erfindungsgemäßen Eckverbinder häufig auf- und wieder abgebaut werden müssen.

Ein besonderer Vorteil des erfindungsgemäßen Eckverbinders ist darin zu sehen, dass er in verschiedensten Ausführungsformen für zwei und mehr Profilelemente hergestellt werden kann, so dass nicht nur zweidimensionale Rahmenkonstruktionen, sondern insbesondere auch dreidimensionale Rahmen und Gestelle mit dem erfindungsgemäßen Eckverbinder realisierbar sind. Bei der bevorzugten Variante, bei der die Anschlussabschnitte jeweils senkrecht zueinander orientiert sind kann das Verbindungselement entweder zwei, drei, vier, fünf oder sogar sechs Anschlussabschnitte umfassen, so dass mit einem Verbindungselement zwei, drei, vier, fünf oder sechs stabförmige Profilelemente miteinander verbunden werden können. Dabei sind jeweils zwei aneinandergrenzende Anschlusselemente im wesentlichen senkrecht zueinander orientiert und die dort montierten Profilelemente können jeweils durch eine Querstrebe miteinander verbunden werden. Bei Varianten mit mehr als zwei Anschlussabschnitten wird jedes Profielemente mit zumindest einem weiteren Profilelement über eine Querstrebe verbunden. Wenn ein Profilelement mehr als ein rechtwinklig angeordnetes Nachbarprofilelement besitzt, kann je nach konstruktiven Gegebenheiten das Profilelement auch mit zwei oder mehreren weiteren Profilelementen über Querstreben verbunden werden.

Gegenstand der Erfindung ist außerdem ein Montagesystem für stabförmige Profilelemente, welches mehrere, insbesondere zwei und mehr Typen der erfindungsgemäßen Eckverbinder umfasst, wobei wenigstens zwei der Eckverbinder eine unterschiedliche Zahl an Anschlusselementen aufweisen. Ein solches Montagesystem eignet sich zum Aufbau komplexer zwei- und dreidimensionaler Rahmenkonstruktionen. Die Profilelemente können speziell angepasste Elemente des Montagesystems sein oder es kann es kann sich um herkömmliche kommerziell erhältliche Profilelemente handeln, die von Benutzer noch entsprechend behandelt werden müssen, um mit den Querstreben des erfindungsgemäßen Montagesystems zusammenwirken zu können.

Gegenstand der Erfindung ist schließlich auch ein zwei oder dreidimensionaler Trag-oder Halterahmen, der aus stabförmigen Profilelementen zusammengesetzt ist, wobei wenigstens zwei Profilelemente über einen erfindungsgemäßen Eckverbinder miteinander verbunden sind. Die äußere Form der erfindungsgemäßen Eckverbinder ist vorzugsweise an die zu verbindenden stabförmigen Profilelemente angepasst, so dass nach dem Zusammenbau eine optisch und funktionell ansprechende Gesamtform des Rahmens mit einer möglichst gleichmäßigen Oberfläche entsteht.

Die Erfindung betrifft demnach auch einen Trage- oder Halterahmen, der aus Profilelementen, insbesondere stabförmigen Profilelementen, zusammengesetzt ist, wobei wenigstens zwei Profilelemente über einen Eckverbinder miteinander verbunden sind. Der erfindungsgemäße Trage- oder Halterahmen ist dadurch gekennzeichnet, dass die Enden der über den Eckverbinder verbundenen Profilstreben außerdem über eine lösbare Querstrebe miteinander verbunden sind, die gegen den Eckverbinder gespannt ist.

Mit der erfindungsgemäßen Lösung sind zahlreiche Vorteile verbunden. So wird mit einem einfachen Verbindungselement eine Rahmenkonstruktion gewährleistet, die stabiler als eine entsprechend verschweißte Rahmenkonzentration ist. Der erfindungsgemäße Trage- oder Halterahmen ist einfach zerlegbar und kann daher gut transportiert werden. Der erfindungsgemäße Trage- oder Halterahmen kann aus einfachen Standardelementen, wie Profilrohren aufgebaut werden. Mit entsprechend konstruierten Eckteilen sind auch Vielecke stabil herstellbar. Da der erfindungsgemäße Rahmen nicht geschweißt werden muss, können auch nicht- oder schwerschweißbare Materialien verwendet werden. Der erfindungsgemäße Trage- oder Halterahmen kann daher beispielsweise auch aus Aluminium bestehen. Da im Gegensatz zu der vom Anmelder in DE 197 34 350 C1 präsentierten Lösung keine im Rahmen eingespannten Innenrahmen oder andere durch eine Zugseilkonstruktion eingespannten Gegenstände für die Stabilität des Rahmens benötigt werden, wird mit dem erfindungsgemäßen Trage- oder Halterahmen eine größere Vielfalt bei der Rahmenkonstruktion gewährleistet.

Vorzugsweise ist die lösbare Querstrebe derart mit den Profilstreben verbunden, dass die Querstrebe in Öffnungen eingreift, die in den Profilelementen ausgespart sind. Dadurch sind keine weiteren Befestigungsmittel zur Verbindung der Querstrebe mit den Profilelementen notwendig. Die Querstrebe kann an ihren Enden durch geeignete Formgebung an ein optimiertes Eingreifen in die Öffnungen der Profilelemente angepasst sein. Beispielsweise kann die Profilstrebe ein gelasertes L-förmiges Ende aufweisen, das in die Öffnung der Profilelemente eingreift. Alternativ kann die Profilstrebe auch mit einem separaten Bauteil in Form eines Stoppers versehen sein, welcher einerseits in das Ende der Profilstrebe und andererseits in das Bohrloch eingreift.

Bevorzugt wird die Querstrebe mittels einer Schraube oder einem Schnellspanner gegen den Eckverbinder gespannt. Dazu liegt der Schraubenkopf, beispielsweise über eine Unterlegscheibe oder eine Sicherungsscheibe auf der Querstrebe; das andere Ende der Schraube greift mit ihrem Außengewinde in ein in einer Bohrung des Eckverbinders vorgesehenes Innengewinde ein. Beim Einschrauben der Schraube wird die Querstrebe gegen den Eckverbinder gezogen und zieht gleichzeitig die Profilelemente gegen den Eckverbinder. Damit wird nicht nur eine stabile Verbindung der beiden Profilelemente mit dem Eckverbinder und damit untereinander gewährleistet, sondern gleichzeitig richten sich die Profilelemente auch noch in den durch den Eckverbinder vorgegebenen Winkel aus.

Für eine besonders gute Führung weist der Eckverbinder jeweils einen Zapfen auf, der in das jeweilige Profilelement eingreift.

Gemäß einer bevorzugten Ausführungsform umfasst der Trag- oder Halterahmen Befestigungsmittel für Einbauelemente umfasst. Es können unterschiedlichste Einbauelemente für den erfindungsgemäßen zwei- oder dreidimensionalen Trag- oder Halterahmen verwendet werden. Lediglich beispielhaft seien hier Wandelemente, Platten, Blenden, Leinwände oder Tücher, wie sie insbesondere im Messebau eingesetzt werden, aber auch Regalböden und ähnliches genannt. Je nach Anwendungsfall können auch Klappen, Türen oder Fenster oder auch Licht- und Tonanlagen als Einbauelemente verwendet werden.

Gemäß einer Ausführungsform umfassen die Befestigungsmittel Magnethalter, die beispielsweise auf oder in den Spannmitteln, dem Verbindungselement und/oder den Profilelementen angeordnet sein können. Magnethalterungen eigenen sich insbesondere zur Montage von Platten, Blenden und ähnlichem.

Alternativ oder zusätzlich können die die Befestigungsmittel auch eine Halteleiste umfassen. In die Halteleiste ist vorzugsweise eine Nut eingelassen, in welche beispielsweise die Randleiste eine Leinwand oder eines Gewebes eingesetzt werden kann.

Gemäß einer weiteren Variante umfassen die Befestigungsmittel elastisch gelagerte Haltestifte. Die Haltestifte können beispielsweise als Klemmstifte ausgebildet sein, in die ein plattenartiges Einbauelement eingesetzt wird. Aufgrund der elastischen Befestigung der Haltestifte am Rahmen können thermische oder mechanische Belastungen, die auf das Einbauelement einwirken, effektiv kompensiert werden.

Gemäß einer weiteren Variante umfassen die Befestigungsmittel in dem Rahmen ausgesparte erste und zweite Schlitze, wobei das Einbauelement auf jeder mit dem Rahmen verbunden Seite wenigstens einen ersten Vorsprung, der in die erste in dem Rahmen ausgesparte Öffnung eingreift, wobei die Längserstreckung der ersten Öffnung im wesentlichen der Längserstreckung des ersten Vorsprungs entspricht, und wenigsten einen zweiten Vorsprung, der in die zweite in dem Rahmen ausgesparte Öffnung eingreift, wobei die Längserstreckung der zweiten Öffnung größer als die Längserstreckung des zweiten Vorsprungs ist, aufweist.

Anders ausgedrückt ist gemäß einer bevorzugten Ausführungsform wenigstens ein von dem Rahmen getragenes Einbauelement vorgesehen, wobei das Einbauelement auf jeder mit dem Rahmen verbunden Seite wenigstens einen ersten Vorsprung, der in eine erste in dem Rahmen ausgesparte Öffnung eingreift, wobei die Längserstreckung der ersten Öffnung im wesentlichen der Längserstreckung des ersten Vorsprungs entspricht, und wenigsten einen zweiten Vorsprung, der in eine zweite in dem Rahmen ausgesparte Öffnung eingreift, wobei die Längserstreckung der zweiten Öffnung größer als die Längserstreckung des zweiten Vorsprungs ist, aufweist.

Besonders vorteilhaft ist auch, dass mit den erfindungsgemäßen Trage- oder Halterahmen nicht nur geschlossene Rahmen, sondern auch offene Rahmensysteme, beispielsweise Konsolen, aufgebaut werden können.

Die Erfindung kann in unterschiedlichsten Bereichen wie dem Messebau, dem Stahlbau, beispielsweise im Geländerbau, dem Gartenbau, aber auch bei der Herstellung von Gehäusen unterschiedlicher Größe, von transportablen Gestellen und Behältern bis hin zu stationären Konstruktionen, wie Regalsystemen, Garagen oder Abstellkammern für Fahrzeuge, Gartengeräte usw. verwendet werden.

Die Erfindung wird im Folgenden unter Bezugnahme auf in den beigefügten Zeichnungen dargestellte Ausführungsbeispiele näher erläutert.

In den Zeichnungen zeigt:
- Figur 1: eine schematische Darstellung einer ersten Ausführungsform eines erfindungsgemäßen Eckverbinders für stabförmige Profilelemente im Längsquerschnitt;
- Figur 2: eine zweite Ausführungsform des erfindungsgemäßen Eckverbinders in einer ähnlichen Ansicht wie Figur 1;
- Figur 3: eine dritte Ausführungsform des erfindungsgemäßen Eckverbinders in einer ähnlichen Ansicht wie Figur 1;
- Figur 4: eine vierte Ausführungsform des erfindungsgemäßen Eckverbinders in einer ähnlichen Ansicht wie Figur 1;
- Figur 5: eine fünfte Ausführungsform des erfindungsgemäßen Eckverbinders in einer ähnlichen Ansicht wie Figur 1;
- Figur 6: ein Teilquerschnitt einer ersten Ausführungsform des Haltezapfens der Figur 5;
- Figur 7: eine Draufsicht auf den Haltezapfen der Figur 6;
- Figur 8: ein Teilquerschnitt einer zweiten Ausführungsform des Haltezapfens der Figur 5;
- Figur 9: eine Draufsicht auf den Haltezapfen der Figur 8;
- Figur 10: ein aus erfindungsgemäßen Eckverbindern und stabförmigen Profilelementen zusammengesetzter Halterahmen mit einem Einbauteil in einer Rückansicht;
- Figur 11: eine schematische Vorderansicht mit Teilbereichen im Querschnitt des Halterahmens der Figur 10;
- Figur 12: eine weitere Ausführungsform eines erfindungsgemäßen Halterahmens mit einem Einbauteil;
- Figur 13: eine perspektivische Detailansicht einer Variante des erfindungsgemäßen Halterahmens mit Randleisten;
- Figur 14: eine perspektivische Detailansicht einer Variante des erfindungsgemäßen Halterahmens mit Befestigungsnut;
- Figur 15: eine schematische Darstellung einer weiteren Variante zur Befestigung eine Einbauteils in dem erfindungsgemäßen Halterahmen; und
- Figur 16: eine schematische Darstellung von aus unterschiedlichen erfindungsgemäßen Eckverbindern und stabförmigen Profilelementen zusammengesetztes dreidimensionales Gestell.

In der folgenden Beschreibung werden Bauelemente, welche dieselbe oder eine ähnliche Funktion erfüllen, mit denselben Bezugsziffern bezeichnet, auch wenn die konkrete Ausgestaltung des Bauteils in den einzelnen Ausführungsformen variieren kann.

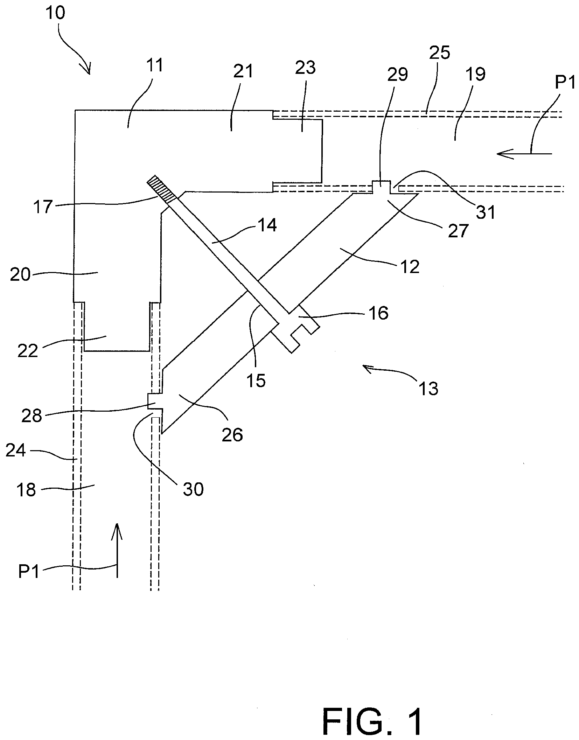

In Figur 1 ist eine erste Ausführungsform eines erfindungsgemäßen Eckverbinders 10 zum Verbinden von stabförmigen Profilelementen dargestellt. Der Eckverbinder 10 umfasst ein Verbindungselement 11, eine Querstrebe 12 sowie ein Spannelement 13. Im dargestellten Beispiel besteht das Spannelement 13 aus einer Innensechskantschraube 14, die durch eine in der Querstrebe 12 ausgesparte Bohrung 15 gesteckt ist und mit ihrem Schraubenkopf 16 auf der Querstrebe 12 aufliegt. Die Innensechskantschraube 14 wird in ein im Verbindungselement 11 ausgespartes Gewinde 17 eingeschraubt. Im dargestellten Beispiel werden mit dem Verbindungselement 11 zwei, in Figur 1 gestrichelt dargestellte, stabförmige Profilelemente 18, 19 in einem 90°-Winkel miteinander verbunden. Dazu weist das Verbindungselement 11 zwei im 90°-Winkel zueinander angeordnete Arme 20, 21 auf, die jeweils Vorsprünge 22, 23 besitzen, welche in die zu verbindenden stabförmigen Profilelemente 18, 19 eingreifen. Im dargestellten Beispiel umgreifen die Außenwände 24, 25 der stabförmigen Profilelemente 18, 19 die Vorsprünge 22, 23, so dass die stabförmigen Profilelemente 18, 19 auf den Vorsprüngen 22, 23 wie bei einer herkömmlichen Steckverbindung geführt werden. Eine besonders stabile Eckverbindung der beiden stabförmigen Profilelemente 18, 19, welche herkömmliche Verbindungen von stabförmigen Profilelementen bei weitem übertrifft, wird durch die erfindungsgemäß vorgesehene Querstrebe 12 erreicht. Die beiden Enden 26, 27 der Querstrebe 12 wirken mit den beiden zu verbindenden stabförmigen Profilelementen 18, 19 so zusammen, dass beim Spannen des Spannelements 13 (im dargestellten Beispiel durch Einschrauben der Innensechskantschraube 14 in das Gewinde 17 des Verbindungselements 11) die beiden stabförmigen Profilelemente in Richtung der Pfeile P1, P2 zu dem Verbindungselement 11 hingezogen werden.

Im dargestellten Beispiel ist dazu in den stabförmigen Profilelementen 18, 19 jeweils eine Bohrung 30, 31 ausgespart, in welche jeweils ein an den Enden 26, 27 der Querstrebe 12 angeordneter Vorsprung 28, 29 eingreift. Wie man der Zeichnung entnimmt, ist die Bohrung 30, 31 in Verschiebungsrichtung P1, P2 etwas größer als der jeweilige Vorsprung 28, 29, so dass die Querstrebe 12 bei Lösen des Spannelementes 13 wieder leicht herausgenommen werden kann.

Bei den stabförmigen Profilelementen 18, 19 kann es sich beispielsweise um Teile eines speziellen Systems handeln, wo bereits entsprechende Bohrungen, die an den jeweiligen Eckverbinder angepasst sind, ausgespart sind. Alternativ ist es auch denkbar, dass Eckverbinder für gängige kommerziell erhältliche Profilelemente, beispielsweise zylindrische oder rechteckige Rohre oder entsprechende Vollelemente, hergestellt werden und der Nutzer zusammen mit den Eckverbindern entsprechend angepasste Bohrschablonen erhält, mit deren Hilfe er die Bohrungen 30, 31 selbst herstellen kann. Ein solches System ist besonders flexibel, da die Länge der entsprechenden stabförmigen Profilelemente 18, 19 vom Nutzer selbst bestimmt werden kann.

Der Eckverbinder 11 kann aus einem Vollmaterial bestehen oder als Hohlteile (ggf. mit stabilisierenden Rippen oder Streben) ausgebildet sein. Vorzugsweise sind die Außenabmessungen des Eckverbinders an die zu verbindenden, stabförmigen Profilelemente angepasst, so dass auch optisch ein bündiger Eindruck entsteht. Im Querschnitt senkrecht zu der durch die Pfeile P1, P2 definierten Längsrichtung können die stabförmigen Profilelemente 18 und die ggf. daran angepassten Eckverbinder 11 eine weitgehend beliebige Form aufweisen, wobei Profilelemente mit rechteckigem oder rundem Querschnitt bevorzugt sind.

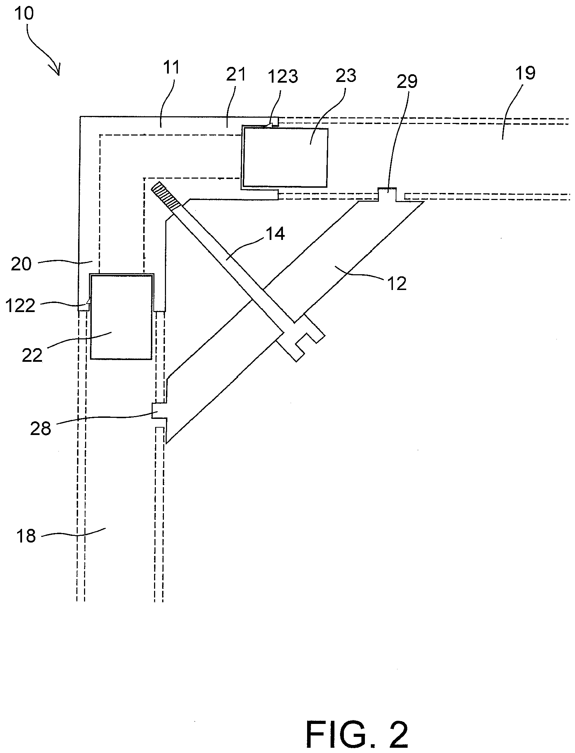

In Figur 2 ist eine Variante des Eckverbinders der Figur 1 dargestellt, bei welcher sowohl die zu verbindenden Profilrohre 18, 19 als auch der Eckverbinder 10 jeweils als Hohlelemente ausgebildet sind. Statt jeweils fest mit dem Profilelement 11 verbundenen Vorsprüngen (vgl. Bezugsziffern 22, 23 in Figur 1) weist die Variante der Figur 2 zwei Anschlussstücke 22 bzw. 23 auf, welche jeweils in die Hohlprofile der Arme 20, 21 des Verbindungselements 11 bzw. in die stirnseitigen Öffnungen der zu verbindenden stabförmigen Profilelemente 18, 19 eingreifen. Die beiden Anschlussstücke 22, 23 sind über Rastlippen 122, 123 in dem Eckverbinder 11 gesichert.

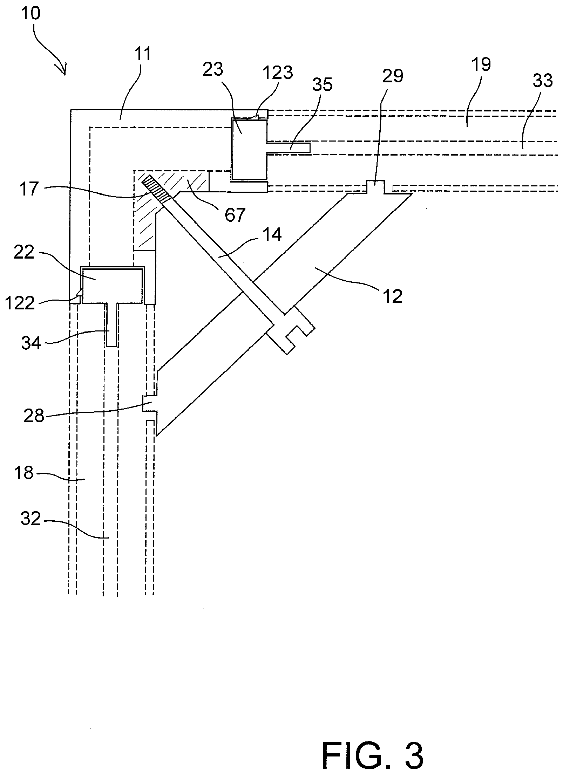

Ein derartiges System ist besonders flexibel, denn, wie beispielsweise in der Variante der Figur 3 dargestellt, kann durch Verwendung unterschiedlicher Anschlusselemente eine leichte Anpassung ein und desselben Verbindungselements 11 an unterschiedliche stabförmige Profilelemente erfolgen. So weisen im Beispiel der Figur 3 die dort dargestellten Profilelemente 18, 19 jeweils einen zentralen Kanal 32 bzw. 33 auf, in welchen ein stiftförmiger Vorsprung 34, 35 des Anschlusselements 22, 23 eingreift.

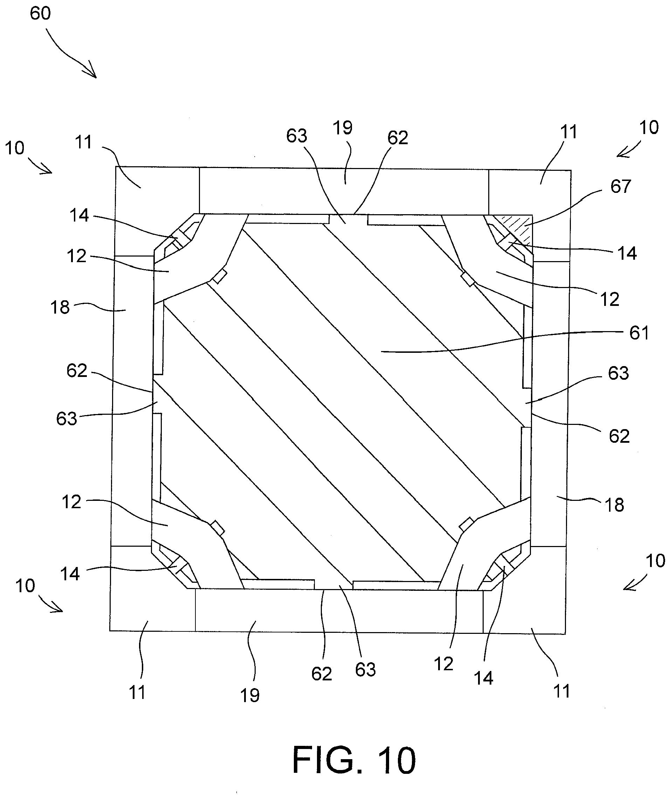

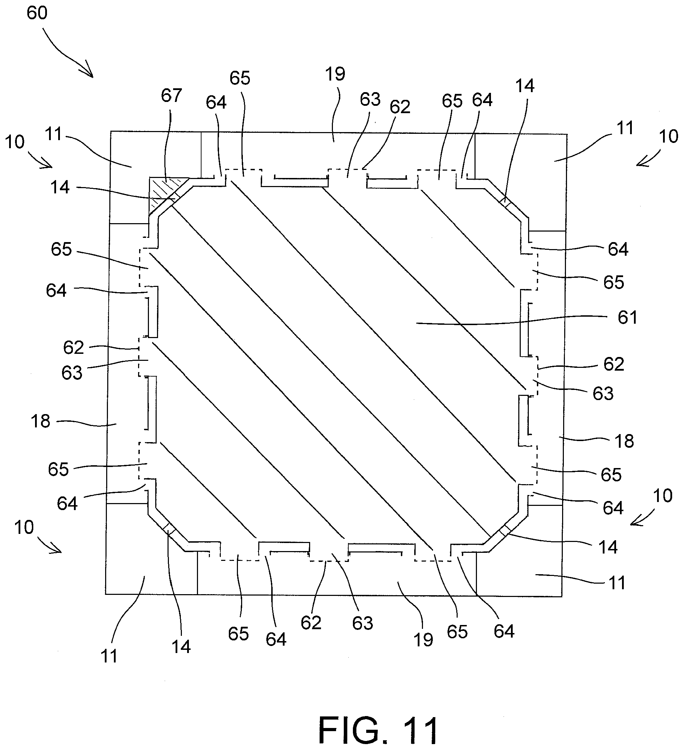

In der Variante der Figur 3 ist außerdem dargestellt, dass die senkrecht zur Zeichenebene der Figur 3 gemessene Dicke des Eckverbinders 11 im Bereich 67 des Gewindes 17 verringert sein kann, beispielsweise auf eine Dicke die der zum Einbringen des Gewindes 17 noch erforderlichen Dicke entspricht. Wie insbesondere in der Figuren 10 und 11 dargestellt ist, können auf diese Weise Einbauteile in einen aus erfindungsgemäßen Eckverbindern und stabförmigen Profilelementen hergestellte Rahmen und Gestelle eingebaut werden, die nicht über die Ober- bzw. Untersite der Eckverbinder hinausragen.

An Stelle der in Figur 1 dargestellten Variante, bei welcher das Verbindungselement 11 mit Vorsprüngen 22, 23 versehen ist, welche in die zu verbindenden stabförmigen Profilelemente 18, 19 eingreifen, können selbstverständlich auch die stabförmigen Profilelemente 18, 19 an ihren stirnseitigen Enden Vorsprünge aufweisen, die in entsprechende Aussparungen in den Armen 20, 21 des Verbindungselements 11 eingreifen. Eine solche Variante ist insbesondere dann bevorzugt, wenn die zu verbindenden stabförmigen Profilelemente beispielsweise aus einem Vollmaterial bestehen.

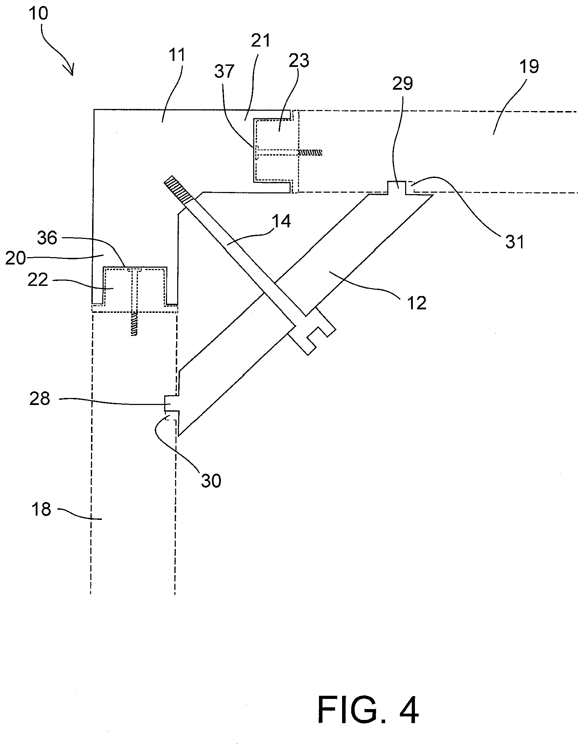

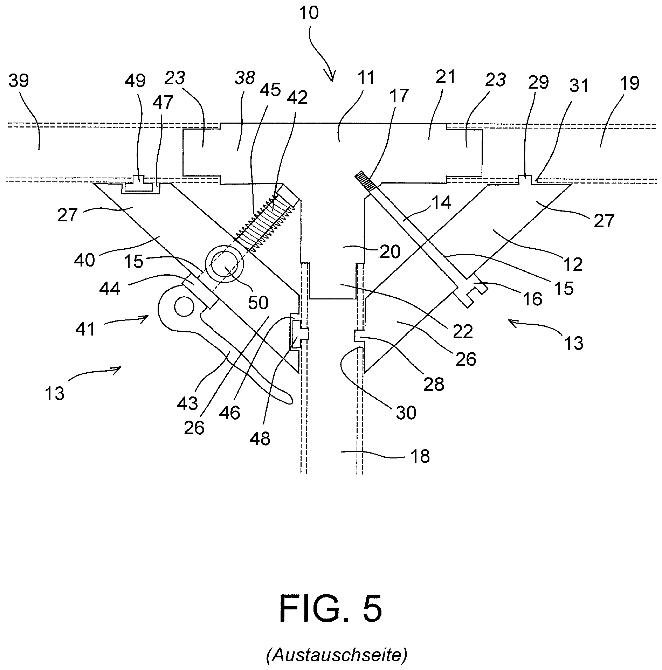

Wenn das Material der Profilelemente aus einem weichen oder spröden Material besteht, kann man auch vorsehen, dass die entsprechenden Vorsprünge aus einem anderen, beständigeren Material gefertigt sind. Eine solche Variante ist in Figur 4 dargestellt. Dort bestehen die stabförmigen Profilelemente 18, 19 aus einem Vollmaterial aus Holz, während stirnseitig Vorsprünge aus Metall 22, 23 mit den stabförmigen Profilelementen 18, 19 verschraubt sind und in Vertiefungen 36, 37 eingreifen, die in den Armen 20, 21 des Verbindungselements 11 ausgespart sind. Die Bohrungen 30, 31 in den Profilelementen 18, 19 können bei aus weichem Material bestehenden Profilelementen beispielsweise mit einem Metallring zur Verstärkung ausgekleidet sein. Vorzugsweise wird man jedoch statt auf Bohrungen in einem solchen Fall auf die in den Figuren 5, 8 und 9 dargestellte Variante mit eingeschraubten Führungszapfen zurückgreifen.

In den in den Figuren 1 bis 4 dargestellten Varianten weist die Querstrebe 12 an ihren Enden 26, 27 jeweils Vorsprünge 28, 29 auf, welche in Vertiefungen/Bohrungen 30, 31 im Mantel der stabförmigen Profilelemente 18, 19 eingreifen. Umgekehrt kann eine kraftschlüssige Verbindung zwischen den Profilelementen und der Querstrebe auch dadurch erreicht werden, dass am Außenmantel der stabförmigen Profilelemente vorspringende Zapfen vorgesehen sind, welche in geeignete Ausnehmungen eingreifen, die an den Enden 26, 27 der Querstrebe 12 ausgespart sind. Derartige Zapfen können einstückig mit dem jeweiligen Profilelement ausgebildet sein, beispielsweise geeignet ausgeformt, oder als separates Bauteil an den Außenmantel des Profilelements angeklebt, angeschweißt, angeschraubt oder kraft- und/oder formschlüssig angebracht worden sein. Vor allem letztere Variante wird im Folgenden unter Bezugnahme auf die Ausführungsformen der Figuren 5-9 ausführlicher erläutert.

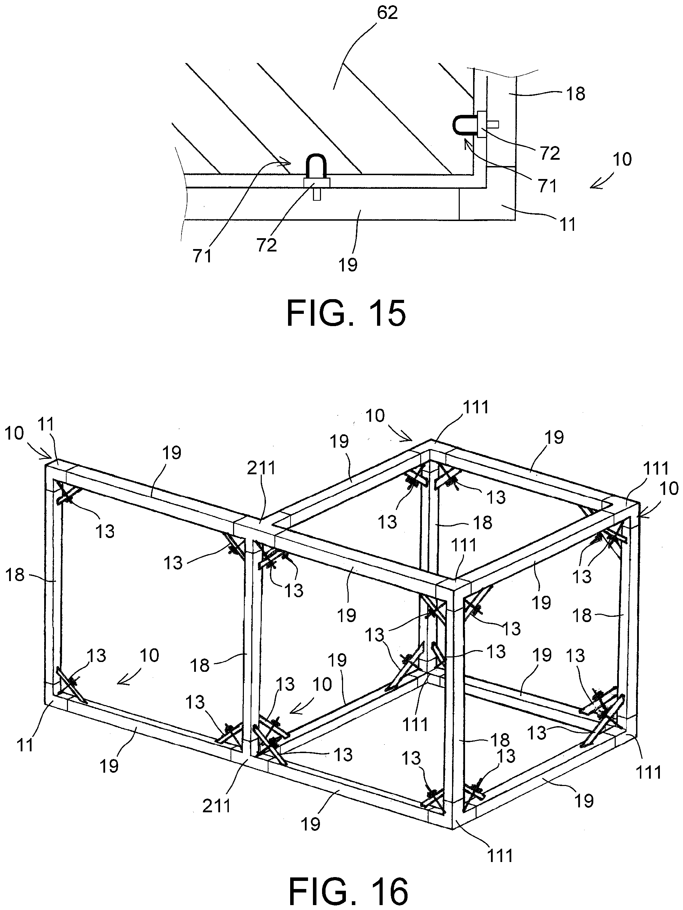

In der Ausführungsform der Figur 5 weist der Eckverbinder 10 drei Arme 20, 21, 38 auf, dient also zur Verbindung von insgesamt drei stabförmigen Profilelementen 18, 19, 39. Im dargestellten Beispiel ist der Eckverbinder 10 als T-förmiger Verbinder ausgebildet, d. h. die zu verbindenden Profilelemente 18, 19, 39 liegen in einer Ebene. In anderen Varianten kann ein Eckverbinder für drei Profilelemente auch einen Arm aufweisen, der in der Darstellung der Figur 5 senkrecht zur Zeichenebene orientiert wäre, so dass auch dreidimensionale Rahmen/Gestelle herstellbar wären. In diesem Fall würde der Eckverbinder die Ecke eines Quaders bilden. Entsprechend sind auch komplexere Eckverbinder für mehr als drei Profilelemente vorstellbar. Beispielsweise können ausgehend von dem in Figur 5 dargestellten Eckverbinder Varianten des Eckverbinders zusätzliche Arme aufweisen, die beispielsweise in der Zeichenebene nach oben, also dem Arm 20 gegenüber liegen und/oder senkrecht zur Zeichenebene nach vorn und/oder nach hinten orientiert sein können. Somit lassen sich mit dem erfindungsgemäßen System Eckverbinder konstruieren, an die bis zu sechs Querstreben angeschlossen werden können, von denen jeweils zwei über rechte Winkel mit den jeweiligen Querstreben verspannt werden. Ein Beispiel für ein komplexeres, dreidimensionales Gestell aus erfindungsgemäßen Eckverbindern wird unten im Zusammenhang mit Figur 16 näher erläutert.

In der Ausführungsform der Figur 5 sind zwei Varianten der Spannelemente 13 und zwei Varianten der Verbindung zwischen den Enden der Querstreben und den Profilelementen dargestellt. Das die stabförmigen Profilelemente 18 und 19 verbindende Spannelement 13 entspricht dem in Figur 1 dargestellten Spannelement. Im Gegensatz dazu besteht das die Profilelemente 18, 39 verbindende Spannelement 13 aus einer Querstrebe 40, die über einen Schnellspanner 41 gegen die Ecke der Arme 20, 38 des Verbindungselements 11 gespannt wird. Der Schnellspanner 41 umfasst einen Führungsstift 42, der in der durch die Arme 20, 38 gebildeten Ecke des Verbindungselements 11 festgelegt ist und die Querstrebe 40 durchquert und mit einem exzentrisch gelagerten Spannhebel 43 verbunden ist, mit dem die Querstrebe 40 über einen Teller 44 gegen die Kraft einer um den Führungsstift 42 gewickelten Rückstellfeder 45 in Richtung Verbindungselement 11 gespannt werden kann.

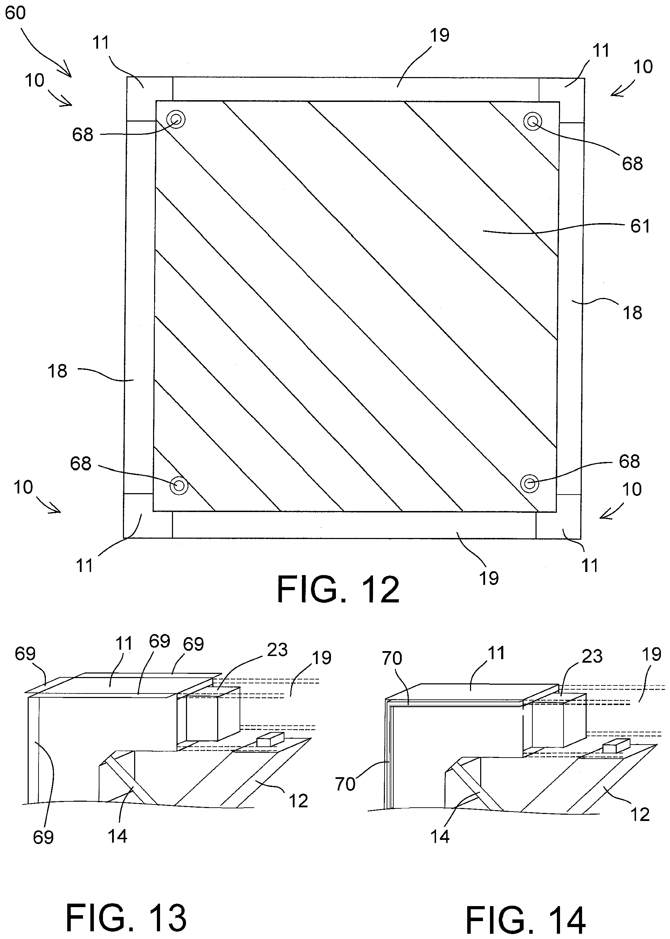

Im Gegensatz zur Querstrebe 12 weist die Querstrebe 40 an ihren Enden 26, 27 keine Vorsprünge, sondern Ausnehmungen 46, 47 auf, in welche Zapfen 48, 49 eingreifen, welche an den stabförmigen Profilelementen 18, 39 befestigt sind. Die Ausnehmungen 46, 47 sind etwas breiter als der Kopf der Zapfen 48, 49 ausgebildet, so dass die Querstrebe 40 beim Öffnen des Spannhebels 43 leicht freigegeben werden kann. Beim Schließen des Spannhebels bildet der in Bewegungsrichtung rückwärtige Teil der Ausnehmung, wie dargestellt, einen Anschlag für den Zapfen 48, 49 und drückt so die Profilelemente 18, 39 in Richtung Verbindungselement 11. Es versteht sich, dass die hier im Zusammenhang mit dem Schnellspanner 41 dargestellte Zapfen-Variante auch in Kombination mit einer herkömmlich verschraubten Querstrebe, beispielsweise in Kombination mit der Innensechskantschraube 14, verwendet werden kann. Die Variante mit Schnellspanner ist insbesondere für Anwendungen bevorzugt, bei denen der so zusammengebaute zweidimensionale Rahmen oder das dreidimensionale Gestell schnell aufgebaut und wieder abgebaut werden muss, beispielsweise im Messebau. Für derartige Anwendungen kann man beispielsweise auf der Querstrebe auch Halteelemente vorsehen, an denen Paneele oder andere Wandverkleidungen befestigt werden können. Beispielhaft ist in der Ausführungsform der Figur 5 ein Magnethalter 50 auf der Oberseite der Querstrebe 40 angeordnet, an welchem ein magnetisches Paneel oder mit magnetischen Haltepunkten versehene nicht-magnetische Paneele befestigt werden können (vgl. Figuren 12 und 13). Ein entsprechender Magnethalter kann selbstverständlich auch auf der gegenüberliegenden Seite der Querstrebe 40 vorgesehen sein, so dass der Rahmen von beiden Seiten abgedeckt werden kann.

Ein besonderer Vorteil des erfindungsgemäßen Eckspanners ist darin zu sehen, dass im Fall von stabförmigen Profilelementen mit polygonalem Querschnitt und daran angepassten Anschlussabschnitten an den Enden 20, 21, 38 der Verbindungselemente 11 (Vorsprünge 22,23 oder Vertiefungen 36, 37) gleichzeitig ein Verdrehschutz für die Profilelemente gewährleistet wird. Im Fall von stabförmigen Profilelementen mit runden Querschnitt kann ein Verdrehschutz beispielsweise dadurch gewährleistet werden, dass die Enden der Profilelemente mit einer Führungsleiste oder - rille verstehen sind, die beim Zusammenbau in entsprechende, auf den Vorsprüngen/Vertiefungen der Verbindungselemente ausgesparte Rillen/Leisten eingreift. Soll der erfindungsgemäße Eckverbinder allerdings mit kommerziell erhältlichen Rohren oder Vollmaterialstäben mit rundem Querschnitt verwendet werden, kann ein Verdrehschutz des Rohrs oder des Stabs auch dadurch gewährleistet werden, dass der Vorsprung des Eckverbinders (vergleiche Vorsprung 23 auf dem Arm 38 des Eckverbinders 11 in Fig. 5) so ausgebildet wird, dass er mit der Bohrung (Bezugsziffer 47 in Fig. 5), die stabförmige Profilelement eingebracht wird, überlappt. Die Bohrung wird dann entweder so tief ausgeführt, dass sie bis in den Vorsprung 23 reicht oder der Vorsprung 23 weist bereits eine entsprechend vorgefertigte Bohrung oder einen Längsschlitz auf, so dass der Stift des Zapfens 49 bis in die Bohrung oder den Längsschlitz des Vorsprungs reicht.

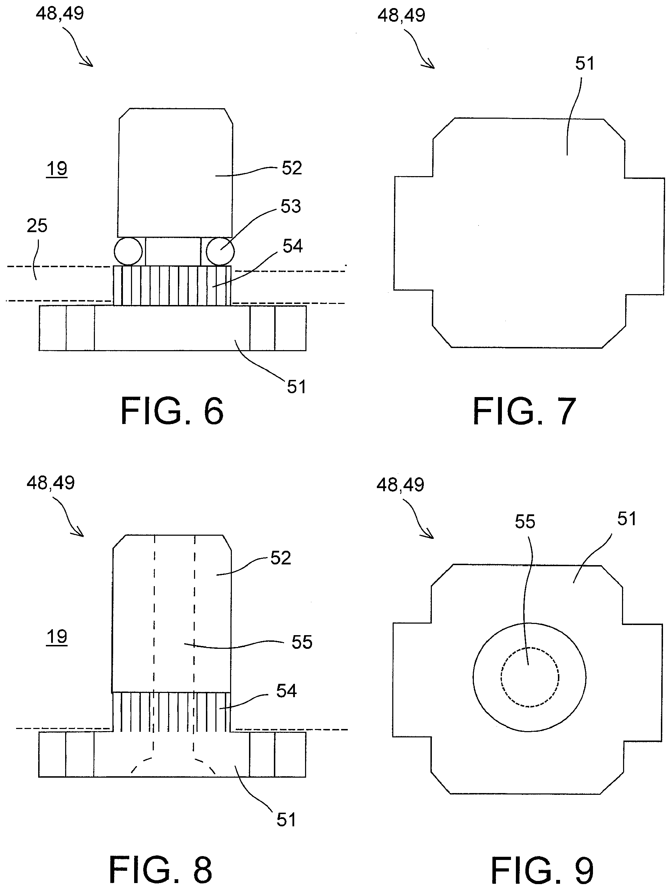

In den Figuren 6-9 sind zwei Varianten der in den Figur 5 dargestellten Haltezapfen 48, 49 dargestellt. Bei der in den Figuren 6 und 7 im Querschnitt bzw. in der Draufsicht dargestellten Ausführungsform weist der Zapfen 48, 49 einen Kopf 51 und einen Stift 52 auf. Der Außendurchmesser des Stiftes 52 entspricht im Wesentlichen dem Innendurchmesser der im stabförmigen Profilelement 18, 19, 39 ausgesparten Bohrung/Vertiefung und wird so in die Bohrung/Vertiefung eingepresst, dass der Kopf 51 auf der Außenseite des stabförmigen Profilelements aufliegt. Als Halterung weist die Variante der Figuren 6 und 7 einen elastischen O-Ring 53 auf, der beim Hineindrücken zusammengepresst wird und sich im Inneren des Profilelementes ausdehnen kann und so den Zapfen 48, 49 vor dem Herausfallen aus der Bohrung schützt. Als Verdrehschutz kann der Zapfen 48, 49 in dem unmittelbar an den Kopf 51 angrenzenden Bereich des Stiftes 52 eine Riffelung 54 aufweisen. Diese Riffelung befindet sich im eingebauten Zustand unmittelbar auf Höhe der Wand bzw. des Mantels 25 des stabförmigen Profilelementes (in Fig. 6 gestrichelt angedeutet). Eine solche Variante wird vorzugsweise bei hohlen stabförmigen Profilelementen verwendet. Im Gegensatz dazu kommt bei massiven stabförmigen Profilelementen vorzugsweise eine Variante zum Einsatz, wie sie in den Figuren 8 und 9 dargestellt ist. Die dort dargestellte Variante des Zapfens 48, 49 entspricht im Wesentlichen der Variante des Zapfens der Figuren 6 und 7, außer dass statt des O-Rings 53 eine durchgehende Bohrung 55 vorgesehen ist, durch die der Zapfen 48, 49 mit dem Profilelement verschraubt werden kann. Alternativ zu den dargestellten Varianten kann der Zapfen 48, 49, der dann lediglich aus einem Kopfteil 51 und einem Stift 52 besteht, in einer Bohrung/Öffnung des Profilelements verklebt, verschweißt, vernietet oder anderweitig befestigt werden.

In Figur 10 ist ein rechteckiger Halterahmen 60 dargestellt, der aus vier Profilelementen 18, 19 zusammengesetzt ist, die über jeweils vier Eckverbinder, welche jeweils ein Verbindungselement 11, eine Querstrebe 12 und ein Spannelement 13 (angedeutet durch eine Spannschraube 14) umfassen, miteinander verbunden sind. In den Halterahmen 60 ist im dargestellten Beispiel ein als Platte 61 ausgebildetes Einbauelement eingesetzt. Wie man insbesondere der rückwärtigen Ansicht der Figur 11 entnimmt, sind auf jeder Seite des Rahmens mittige Schlitze 62 ausgespart, in welche erste Vorsprünge 63 der Platte 61 passgenau eingreifen. Die mittigen ersten Schlitze 62 und die Vorsprünge 63 legen die Platte 61 passgenau im Halterahmen 60 fest. An den Enden jedes Profilelements 18, 19 sind zweite Schlitze 64 ausgespart, die etwas länger als die entsprechenden zweiten Vorsprünge 65 der Platte 61 sind, welche in die zweiten Schlitze 64 eingreifen. Dadurch ist ein gewisses Spiel zwischen den Enden der Platte 61 und dem aus den Profilelementen 18, 19 hergestellten Rahmen 60 bei thermischer und/oder mechanischer Belastung möglich. Ein spannungsinduziertes Verbiegen der Platte 61 kann so wirksam verhindert werden. Durch entsprechende Dimensionierung der Schlitze und Vorsprünge wird die Platte 61 im dargestellten Beispiel mit einem gewissen Abstand zum Rahmen gehalten.

Im dargestellten Beispiel weist die Platte 61 abgeschrägte Ecken 66 auf. Eine solche Lösung kann beispielsweise gewählt werden, wenn das Verbindungselement 11 die (senkrecht zur Zeichenebene gemessene) gleiche Dicke wie die Profilelemente 18, 19 aufweist. Es ist aber auch möglich, dass Verbindungselement beispielsweise in dem mit Bezugsziffer 67 bezeichneten Bereich mit einer geringeren Dicke zu versehen, so dass die Platte 61 auch rechteckig ohne abgeschrägte Ecken ausgebildet werden kann. Wesentlich ist allein, dass der dünnere Bereich 67 noch eine ausreichende Stärke aufweist, um das Ende einer Spannschraube 14 des Spannelements 13 aufzunehmen oder ein stabiles Lager für einen Schnellspanner 41 zu bieten.

In Figur 12 ist eine Variante des erfindungsgemäßen Halterahmens 60 dargestellt, bei dem die eingesetzte Platte 61 bündig mit dem Rahmen abschließt. Dazu können die Verbindungselemente 11 und gegebenenfalls auch die Profilelemente 18, 19 geeignete Auflagebereiche mit geringerer Dicke aufweisen, in welche die Platte bündig eingesetzt werden kann. Zur Befestigung der Platte 61 wird in einem solchen Fall nicht das in den Figuren 10 und 11 dargestellte System aus Vorsprüngen und Schlitzen verwendet, sondern auf ein anderes geeignetes Haltesystem zurückgegriffen. Bei einer dauerhaften Installation kann die Platte 61 beispielsweise mit den Verbindungselementen 11 und/oder den stabförmigen Profilelementen 18, 19 verklebt oder verschraubt werden. Alternativ kommt auch eine Befestigung mit Klipsen, Doppelklebeband oder Klettbändern in Frage. Besonders bevorzugt ist eine magnetische Befestigung, beispielsweise mithilfe von auf den Querstreben 12 angebrachten Magnethaltern (vgl. Bezugsziffer 50 in Figur 5). In einem solchen Fall sind dann auf einer Seite der Platte entsprechende Haltemagnete (Bezugsziffer 68 in Figur 12) vorgesehen, die mit den Magnethaltern 50 zusammenwirken.

Eine besonders bevorzugte Variante ist in Figur 13 dargestellt, wo das Verbindungselement 11 und das stabförmige Profilelement 19 so ausgespart sind, dass an ihren Kanten lediglich ein dünner umlaufender Steg 69 die Platte 61 umgibt, wobei die Tiefe des Stegs in etwa der Dicke der Platte 61 entspricht. Im zusammengebauten Zustand kann dann ein Rahmen oder Gestellt aufgebaut werden, bei dem von außen nur noch die Platten 61 zu sehen sind und lediglich der dünne Steg 69 zwischen den Platten sichtbar bleibt. Je nach Anforderung können die Verbindungselemente 11 und die Profilelemente 18, 19 nur auf einer Seite oder auf beiden gegenüberliegenden Seiten mit derartigen Stegen zum Einsetzen von Platten versehen sein. Wie man in Figur 13 erkennt, kann auch die Stirnseite der Einbauelemente 11 und der Profilelemente 18, 19 mit einem entsprechenden Steg versehen sein, so dass ein so gebildeter Rahmen von allen Seiten verkleidet werden kann. In diesem Fall kann man beispielsweise in hohle Profilelemente 18, 19 Magnethalterungen einschieben, die dann ein entsprechend außen angebrachtes Paneel halten.

In Figur 14 ist eine weitere Variante des erfindungsgemäßen Halterahmens 60 dargestellt, bei dem auf der Vorder- und/oder Rückseite der Verbindungselemente 11 und gegebenenfalls der Profilelemente 18, 19 eine Klemmleiste 70 angebracht ist, in welche beispielsweise eine Randleiste eines Einbauelements 61 eingesetzt werden kann. Eine solche Montageart des Einbauelements ist besonders dann bevorzugt, wenn es sich bei dem Einbauelement 61 um ein mit einer Randleiste versehenes Gewebe, beispielsweise eine Spanntuch oder ähnliches handelt. Mit einer entsprechenden Dimensionieren der Randleiste kann auch der Abstand des Einbauelements 61 vom Rahmen angepasst werden, was besonders interessant ist, falls beispielsweise noch eine Beleuchtungseinrichtung, Lautsprecher oder ähnliches zwischen Einbauelement 61 und Halterahmen 60 angeordnet werden sollen.

Schließlich ist in Figur 15 eine weitere Befestigungsvariante für plattenartige Einbauelemente dargestellt. In diesem Fall wird die Platte 61 durch geschlitzte Haltestifte 71 gehalten, in welche die Platte 61 eingepresst ist. Die Haltestifte 71 wiederum sind über elastische Ringe 72 mit dem stabförmigen Profilelement 18, 19 verbunden. Aufgrund der erfindungsgemäß vorgesehenen Eckverbinder ist es in diesem Fall möglich, einstückige Stifte 71 zu verwenden, da die Platte bereits beim Zusammenbau des Rahmens eingesetzt wird. Die elastischen Ringe 72 erlauben eine gewisse Beweglichkeit des Systems bei thermisch oder mechanisch induzierten Spannungen, so dass auch bei thermischer Ausdehnung der Platte und/oder des Rahmens eine ebene, wellenfreie Anordnung der Platte 61 gewährleistet ist.

Ein besonderer Vorteil des erfindungsgemäßen Eckverbindungssystems ist darin zu sehen, dass Rahmen und Gestelle in unterschiedlichster ein-, zwei- und dreidimensionaler Konfiguration schnell und stabil erzeugt werden können. Abschließend ist daher in Figur 16 ein dreidimensionales Gestell dargestellt, welches aus Profilelementen zusammengebaut ist, die mit unterschiedlichsten Varianten des erfindungsgemäßen Eckverbinders hergestellt ist. Neben Eckverbindern 11 für zwei Profilelemente 18, 19, wie sie im Zusammenhang mit den Figuren 1 bis 4 dargestellt sind, erkennt man Eckverbinder 111 für drei Profilelemente, bei denen jedoch im Gegensatz zum T-förmigen Eckverbinder der Figur 5 alle drei Arme senkrecht zueinander stehen, so dass sie zum Aufbau dreidimensionaler Gestelle geeignet sind. Schließlich kommen bei der in Figur 16 dargestellten Ausführungsform auch Eckverbinder 211 für Profilelemente 18, 19 zum Einsatz. Im Beispiel der Figur 16 werden die Spannelemente 13 der besseren Übersichtlichkeit halber nur sehr schematisch dargestellt.

## Patentansprüche

1. Eckverbinder (10) für stabförmige Profilelemente, mit
einem Verbindungselement (11), das wenigstens zwei, im wesentlichen senkrecht zueinander orientierte Anschlussabschnitte (20,21), die jeweils so ausgebildet sind, dass jeweils ein Anschlussabschnitt (20,21) und ein Stirnende der zu verbindenden stabförmigen Profilelemente (18,19,39) ineinandergreifen, und einen von den Anschlussabschnitten (20,21) gebildeten Eckbereich (67) umfasst,
wenigstens einer Querstrebe (12) deren Enden (26,27) so ausgebildet sind, dass jeweils ein Ende (26,27) der Querstrebe (12) und ein auf einer Mantelfläche der zu verbindenden stabförmigen Profilelemente (18,19,39) vorgesehener Verbindungsabschnitt (30,31,48,49) lösbar ineinandergreifen,
und
einem Spannelement (13), welches lösbar derart auf die Querstrebe (12) wirkt, dass beim Betätigen des Spannelements die Querstrebe (12) die zu verbindenden Profilelemente (18,19,39) in Richtung Verbindungselement (11) zieht oder drückt, wobei das Spannelement (13) eine Schraube (14), die in ein in dem Eckbereich (67) des Verbindungselements (11) ausgespartes Innengewinde (17) einschraubbar ist, oder einen Schnellspanner (41) umfasst, **dadurch gekennzeichnet dass** an den Enden (26,27) der Querstrebe (12) Ausnehmungen (46,47) ausgespart sind, in die Zapfen (48,49) eingreifen können, die in den Verbindungsabschnitten der Mantelflächen der stabförmigen Profilelemente angeordnet sind, wobei jeder Zapfen (48,49) einen Kopf (51), der auf der Mantelfläche des Profilelements aufliegt, und einen Stift (52), der in eine in dem Profilelement ausgesparte Bohrung eingepresst ist, aufweist.

2. Eckverbinder gemäß Anspruch 1, **dadurch gekennzeichnet, dass** der Eckverbinder (10) und die zu verbindenden stabförmigen Profilelemente (18,19,39) formschlüssig miteinander verbunden werden.

3. Eckverbinder gemäß einem der Ansprüche 1 oder 2, **dadurch gekennzeichnet, dass** der Anschlussabschnitt (20,21) des Eckverbinders (11) Anschlusselemente (22,23) umfasst, deren Querschnitt an den Stabquerschnitt der stabförmigen Profilelemente angepasst ist.

4. Eckverbinder gemäß Anspruch 3, **dadurch gekennzeichnet, dass** die Anschlusselemente (20,21) austauschbar in dem Anschlussabschnitt (20,21) des Eckverbinders (11) angeordnet sind.

5. Eckverbinder gemäß einem der Ansprüche 1 bis 4, **dadurch gekennzeichnet, dass** das Verbindungselement (11) zwei, drei, vier, fünf oder sechs Anschlussabschnitte (20,21) umfasst, wobei jeweils zwei aneinandergrenzende Anschlusselemente im wesentlichen senkrecht zueinander orientiert sind.

6. Montagesystem für stabförmige Profilelemente, welches mehrere Eckverbinder gemäß Anspruch 4 umfasst, wobei wenigstens zwei Eckverbinder eine unterschiedliche Zahl an Anschlusselementen (20,21) aufweisen.

7. Trag- oder Halterahmen (60), der aus stabförmigen Profilelementen (18,19) zusammengesetzt ist, **dadurch gekennzeichnet, dass** wenigstens zwei Profilelemente (18,19) über einen Eckverbinder (10) gemäß einem der Ansprüche 1 bis 5 miteinander verbunden sind

8. Trag- oder Halterahmen gemäß Anspruch 7, **dadurch gekennzeichnet, dass** der Rahmen (60) Befestigungsmittel (50,62,64,70,71) für Einbauelemente (61) umfasst.

9. Trag- oder Halterahmen gemäß Anspruch 8, **dadurch gekennzeichnet, dass** die Befestigungsmittel Magnethalter (50) umfassen.

10. Trag- oder Halterahmen gemäß einem der Ansprüche 8 oder 9, **dadurch gekennzeichnet, dass** die Befestigungsmittel eine Halteleiste (70) umfassen.

11. Trag- oder Halterahmen gemäß einem der Ansprüche 8 bis 10, **dadurch gekennzeichnet, dass** die Befestigungsmittel elastisch gelagerte Haltestifte (71) umfassen.

12. Trag- oder Halterahmen gemäß einem der Ansprüche 8 bis 11, **dadurch gekennzeichnet, dass** die Befestigungsmittel in dem Rahmen ausgesparte erste und zweite Schlitze (62,64) umfassen, wobei das Einbauelement (61) auf jeder mit dem Rahmen (60) verbunden Seite wenigstens einen ersten Vorsprung (63), der in die erste in dem Rahmen (60) ausgesparte Öffnung (62) eingreift, wobei die Längserstreckung der ersten Öffnung (62) im wesentlichen der Längserstreckung des ersten Vorsprungs (63) entspricht, und wenigsten einen zweiten Vorsprung (65), der in die zweite in dem Rahmen (60) ausgesparte Öffnung (64) eingreift, wobei die Längserstreckung der zweiten Öffnung (64) größer als die Längserstreckung des zweiten Vorsprungs (63) ist, aufweist.
